# EUROPÄISCHE PATENTANMELDUNG

(11) **EP 4 242 863 A2**
(43) Veröffentlichungstag der Anmeldung: **13.09.2023**
(21) Anmeldenummer: 23185772.3
(22) Anmeldetag: 17.07.2023
(51) Int. Cl.: G06F 15/177, G06F 12/00

(54) **VERFAHREN UND SYSTEMANORDNUNG ZUM HARDWAREEFFIZIENTEN ANSTEUERN EINES GERÄTS**

(71) Anmelder: Dettmer Informatik GmbH & Co. KG, 85283 Wolnzach (DE)
(72) Erfinder: Dettmer, Michael, Wolnzach (DE)
(74) Vertreter: Reich, Jochen

(57) **Zusammenfassung**

Die vorliegende Erfindung ist auf ein Verfahren gerichtet, welches es ermöglicht, dass ein Gerät besonders effizient konfiguriert werden kann bzw. dass Ansteuerungsbefehle besonders effizient ausgewählt werden können. Die vorliegende Erfindung schafft es, dass in der zweidimensionalen Speicherstruktur die Auswahloptionen lediglich einmal belegt werden müssen und somit wird ein effizientes Verfahren geschaffen, das weniger Prozessorleistung als auch Speicher konsumiert. Es stellt sich der Vorteil ein, dass Parameter nicht wiederholt ausgelesen bzw. ausgewählt werden müssen und redundant abgespeichert werden müssen. Somit werden Fehler vermieden und der Speicherbedarf ist gegenüber dem Stand der Technik stark reduziert. Die Erfindung ist ebenfalls auf eine entsprechend eingerichtete Systemanordnung gerichtet, welche eingerichtet ist, das Verfahren auszuführen. Darüber hinaus wird ein Computerprogramm vorgeschlagen, welches Befehle vorhält, die geeignet sind, das Verfahren umzusetzen bzw. die Systemanordnung zu betreiben.

## Beschreibung

Die vorliegende Erfindung ist auf ein Verfahren gerichtet, welches es ermöglicht, dass ein Gerät besonders effizient konfiguriert werden kann bzw. dass Ansteuerungsbefehle besonders effizient ausgewählt werden können. Die vorliegende Erfindung schafft es, dass in der zweidimensionalen Speicherstruktur die Auswahloptionen lediglich einmal belegt werden müssen und somit wird ein effizientes Verfahren geschaffen, das weniger Prozessorleistung als auch Speicher konsumiert. Es stellt sich der Vorteil ein, dass Parameter nicht wiederholt ausgelesen bzw. ausgewählt werden müssen und redundant abgespeichert werden müssen. Somit werden Fehler vermieden und der Speicherbedarf ist gegenüber dem Stand der Technik stark reduziert. Die Erfindung ist ebenfalls auf eine entsprechend eingerichtete Systemanordnung gerichtet, welche eingerichtet ist, das Verfahren auszuführen. Darüber hinaus wird ein Computerprogramm vorgeschlagen, welches Befehle vorhält, die geeignet sind, das Verfahren umzusetzen bzw. die Systemanordnung zu betreiben.

In einer zunehmend digitalisierten Welt, in der Datenmengen exponentiell wachsen, ist die Speichereffizienz zu einem wichtigen Faktor geworden. Die optimale Nutzung von Speicherressourcen spielt nicht nur eine Rolle bei der Gewährleistung reibungsloser Betriebsabläufe, sondern hat auch erhebliche Auswirkungen auf die Umwelt.

Mit der exponentiellen Zunahme digitaler Daten in den letzten Jahren steigt auch der Bedarf an Speicherplatz unaufhaltsam. Unternehmen, Behörden und Privatpersonen generieren täglich große Datenmengen, sei es durch soziale Medien, Cloud-Services, IoT-Geräte oder andere digitale Anwendungen. Dieser enorme Datenzuwachs stellt eine Herausforderung dar, da die Bereitstellung von ausreichendem Speicherplatz nicht nur teuer, sondern auch energieintensiv ist.

Traditionelle Speichersysteme sind oft nicht optimal auf die effiziente Nutzung von Ressourcen ausgelegt. Dies führt zu einer Verschwendung von Energie und physikalischem Platz, was wiederum zu höherem Energieverbrauch und CO2-Emissionen führt. Serverfarmen, Rechenzentren und Cloud-Infrastrukturen benötigen beträchtliche Mengen an Strom für den Betrieb und die Kühlung der Geräte. Ein ineffizientes Speicherdesign erhöht den Energiebedarf dieser Einrichtungen unnötig und trägt somit zur Umweltbelastung bei.

Die Verbesserung der Speichereffizienz bietet eine Vielzahl von Vorteilen für Unternehmen und die Umwelt. Durch die Reduzierung des benötigten Speicherplatzes können Kosten gesenkt und Betriebsabläufe optimiert werden. Effiziente Speichersysteme ermöglichen eine schnellere Datenverarbeitung und - abfrage, was zu einer verbesserten Leistung und Benutzererfahrung führt. Gleichzeitig werden die Umweltauswirkungen minimiert, da weniger Energie zur Verfügung gestellt und weniger physischer Platz benötigt wird.

Um die Speichereffizienz zu verbessern, sind aus dem Stand der Technik verschiedene Maßnahmen bekannt. Eine Möglichkeit besteht darin, innovative Speichertechnologien zu nutzen, die eine höhere Datendichte pro Speicherplatz ermöglichen. Beispiele hierfür sind Solid-State-Laufwerke (SSDs) und holographische Speicher. Darüber hinaus ist das Datenmanagement von großer Bedeutung. Durch eine effektive Datenkompression, Deduplizierung und Archivierung können redundante Daten vermieden und der Speicherplatz optimal genutzt werden.

Effiziente Datenstrukturen sind ein wesentlicher Bestandteil der Softwareentwicklung, da sie die Grundlage für die Organisation und den Zugriff auf Daten bilden. Eine effiziente Datenstruktur zeichnet sich durch ihre Fähigkeit aus, Operationen wie Einfügen, Löschen und Durchsuchen von Daten schnell und mit geringem Speicherbedarf auszuführen. Beispiele für effiziente Datenstrukturen sind Listen, Arrays, Stapel, Warteschlangen, Bäume und Hashtabellen. Jede dieser Datenstrukturen bietet bestimmte Vorteile und eignet sich für unterschiedliche Anwendungsfälle. Durch die Auswahl der richtigen Datenstruktur können Entwickler die Leistung ihrer Programme optimieren und die Ausführungszeit erheblich reduzieren. Darüber hinaus spielen auch Algorithmen, die auf effizienten Datenstrukturen basieren, eine entscheidende Rolle bei der Bewältigung von Herausforderungen in der Verarbeitung großer Datenmengen oder bei der Optimierung von Such- und Sortiervorgängen. Insgesamt tragen effiziente Datenstrukturen wesentlich dazu bei, die Leistungsfähigkeit und Skalierbarkeit von Softwarelösungen zu verbessern.

Die Auswahl einer effizienten Speicherstruktur kann schwierig sein, weil verschiedene Faktoren berücksichtigt werden müssen. Jede Anwendung hat spezifische Anforderungen an den Zugriff auf Daten. Manche Anwendungen erfordern schnelles Einfügen und Löschen, während andere hauptsächlich auf Lesevorgänge optimiert sein müssen. Die Wahl der richtigen Datenstruktur hängt daher stark von den Anforderungen der Anwendung ab. Die Größe und Art der zu verarbeitenden Daten beeinflussen die Wahl der Speicherstruktur. Einige Datenstrukturen eignen sich besser für kleine Datenmengen, während andere besser für große Datensätze oder bestimmte Datentypen geeignet sind. Die Leistung und Effizienz einer Datenstruktur hängen von den durchgeführten Operationen ab. Manche Operationen können in bestimmten Datenstrukturen schneller ausgeführt werden als in anderen. Die Analyse der Laufzeitkomplexität und des Speicherbedarfs der Operationen ist wichtig, um die effizienteste Wahl zu treffen.

Gemäß herkömmlicher Verfahren müssen Maschinen bzw. Geräte aufwendig angesteuert werden. Komplexe Geräte bieten eine Vielzahl an Eingabefunktionen, welche allesamt spezifisch konfiguriert werden. Auf diese Art und Weise entsteht eine große Vielzahl an Auswahloptionen, die teils manuell belegt werden müssen und sodann weiterverarbeitet und abgespeichert werden müssen. Das Problem, das sich hierbei stellt, ist dass die Maschinen teilweise bei einer falschen Konfiguration ein falsches Ergebnis liefern. Ein einziger Fehler in der Konfiguration kann dazu führen, dass das Endergebnis nicht mehr brauchbar ist, was bei der anschließenden Behebung des Problems sehr aufwendig und teuer ist.

Ein weiterer nachteiliger Aspekt im Stand der Technik ist es, dass teils menschliche Benutzer die Eingaben tätigen müssen und durch die hohe Anzahl der Eingaben oftmals überfordert sind. Im Stand der Technik müssen Matrizen mit Konfigurationsparametern derart spezifiziert werden, dass bei einer n x n Matrix tatsächlich auch n² Parameter gesetzt werden müssen. Dies ist nicht nur in der Eingabe aufwendig und fehleranfällig, sondern vielmehr steigen mit Anzahl der Eingabemöglichkeiten auch der Speicherbedarf und die Prozessorbelastung bei deren weiteren Verarbeitung. Hinzu kommt, dass typischerweise entsprechende Parameter mittels einer Luftschnittstelle übertragen werden müssen und somit eine entsprechende Bandbreite gefordert wird. In mobilen Netzwerken kommt es hingegen oftmals zu Schwankungen und gerade bei Echtzeitanforderungen können diese hohe Anzahlen an Parametern nicht mehr adäquat übertragen werden.

Es ist daher eine Aufgabe der vorliegenden Erfindung ein Verfahren bzw. eine Systemanordnung vorzuschlagen, welche es ermöglicht, dass Eingabeparameter effizient abgefragt und abgespeichert werden können. Ferner ist es eine Aufgabe, generell eine hardwareeffiziente Vorrichtung bzw. Systemanordnung zu schaffen, welche das Verfahren ausführen kann. Das Verfahren soll zudem eingerichtet sein, die Systemanordnung zu betreiben. Darüber hinaus soll ein Computerprogrammprodukt vorgeschlagen werden, das Steuerbefehle aufweist, welche das Verfahren ausführen bzw. die Systemanordnung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum hardwareeffizienten Ansteuern eines Geräts vorgeschlagen, aufweisend
- ein Bereitstellen einer symmetrischen, zweidimensionalen Speicherstruktur mit paarweisen Auswahloptionen, wobei die Auswahloptionen fortlaufend jeweils in beide Dimensionen angeordnet werden und die Auswahloptionen als entweder qualitative oder quantitative Parameter vorliegen;
- ein Auslesen mindestens eines Eingabesensors zur Zuweisung von Parameterwerten zu den Parametern, wobei die Parameter jeweils der paarweisen Auswahloptionen nur einmal belegt werden; ein Anwenden einer in einem persistenten Datenspeicher abgespeicherten Gewichtung auf die Parameterwerte und ein Normieren der gewichteten Parameterwerte; und ein Ansteuern des Geräts mittels der gewichteten und normierten Parameterwerte, wobei Gruppen von Parameterwerten Ansteuerungsbefehlen zugordnet sind.

Das vorgeschlagene Verfahren ist in mehrfacher Weise hardwareeffizient, da sowohl das Durchführen als auch das Abspeichern der zweidimensionalen Speicherstruktur effizient erfolgt. Dies ist deshalb der Fall, da die Parameter jeweils paarweise nur einmal belegt werden. Somit entstehen gegenüber dem Stand der Technik dem Umfang nach geringere Datensätze, welche weniger Speicher und somit generell weniger Hardwareressourcen verbrauchen. Auch ein Verarbeiten der gesammelten Daten ist effizienter. Somit wird der Nachteil aus dem Stand der Technik überwunden, dass eine zweidimensionale Speicherstruktur, also eine Matrix, stets komplett mit Werten befüllt werden muss. Vorliegend liegen jedoch paarweise Auswahloptionen vor, sodass es nicht notwendig ist, die Auswahloptionen zweimal abzufragen und die Ergebnisse abzuspeichern.

Somit kann das Gerät / die Hardware effizient angesteuert werden und der technische Effekt stellt sich bereits beim Auslesen des Eingabesensors und der zugrunde liegenden Systemanordnung ein.

In einem vorbereitenden Verfahrensschritte erfolgt ein Bereitstellen einer symmetrischen, zweidimensionalen Speicherstruktur. Die Speicherstruktur kann generell als eine Matrix bzw. als eine n x n Speicherstruktur vorliegen. Dies bedeutet, dass die beiden Dimensionen der Speicherstruktur von gleichem Rang, also gleicher Mächtigkeit sind. Hierdurch entstehen paarweise Auswahloptionen. So ist es möglich, dass in der zweidimensionalen Speicherstruktur horizontal, also entlang der x-Achse, die Optionen A, B, C angeordnet sind und vertikal ebenfalls die gleichen Optionen A, B, C angeordnet sind. Somit entsteht eine zweidimensionale Speicherstruktur mit n = 3. Die Auswahloptionen sind somit auch fortlaufend jeweils in beide Dimensionen angeordnet, wobei fortlaufend auch impliziert, dass diese invers angeordnet sein können. So kann beispielsweise horizontal die Folge der Optionen A, B, C verlaufen und vertikal C, B, A.

Die Auswahloptionen weisen Parameter auf, die entweder qualitativ oder quantitativ sein können. Qualitative Parameter können beispielsweise vorsehen, dass etwas schlecht, mittel oder gut ist. Somit besteht ein Wertebereich, der gemäß einer vordefinierten Regel definiert ist. So kann in dem genannten Beispiel eine Gleichverteilung vorliegen und die Parameterwerte können äquidistant ausgestaltet sein. So kann beispielsweise die Qualität derart unterteilt werden, dass der Option gut ein Wert von 0-0,33 zugeordnet ist. Einem Wert mittel kann der Wertebereich 0,34 bis 0,66 zugeordnet werden. Dem qualitativen Parameter schlecht kann der Wertebereich 0,67-1 zugeordnet werden. Somit ist es also möglich, auch qualitative Parameter maschinell zu verarbeiten. Quantitative Parameter sind hierbei zum Beispiel numerische Werte, welche entsprechend spezifiziert werden.

Um die zweidimensionale Speicherstruktur zu beschreiben, erfolgt ein Auslesen mindestens eines Eingabesensors zur Zuweisung von Parameterwerten zu den Parametern. Es wird also eine Eingabe erwartet, die den Parametern der zweidimensionalen Speicherstruktur Parameterwerte zuweist. Bei einem Parameter kann es sich beispielsweise um eine Variable handeln, welche entsprechend einem Datentyp belegt werden muss. So kann es sich bei dem Parameter um eine Gleitkommazahl handeln und der entsprechende Wert beispielsweise 0,5 sein. Hierzu ist mindestens ein Eingabesensor vorgesehen, der einmalig oder kontinuierlich Daten schreibt, welche dann als Parameterwerte den Parametern zugeordnet werden. Der Eingabesensor kann auch virtuell ausgestaltet werden, sodass eine Schleife implementiert wird, die eine entsprechende Eingabe erwartet.

Die Parameter werden jeweils in den paarweisen Auswahloptionen nur einmal belegt. Dies hat den Vorteil, dass nicht die gesamte Datenstruktur beschrieben werden muss, sondern weniger als die Hälfte. Insgesamt beträgt also die Anzahl der zu schreibenden Datensätzen n Quadrat halbe minus n Halbe, also n²/2 - n/2. Somit wird also vermieden, dass in der Matrix alle Werte beschrieben werden müssen und gegenüber herkömmlichen Eingabeverfahren müssen weniger als die Hälfte der Eingabeparameter abgespeichert werden. Dies schafft in mehrfacher Weise eine Hardwareeffizienz. Die Ersparnis im Speicherbedarf rührt daher, dass die zweidimensionale Speicherstruktur symmetrisch ist, und somit würden die Daten redundant geschrieben werden. So ist beispielsweise der Wert in der ersten Reihe, zweite Spalte der reziproke Wert, wie der in der zweiten Reihe, erste Spalte. Es ergäbe sich quasi eine gespiegelte Matrix, mit doppelten Werten, was erfindungsgemäß vermieden wird. Es kann auch vorkommen, dass entsprechende Werte zueinander invers/reziprok sind. So kann beispielsweise in der ersten Zeile, in der zweiten Spalte der Wert 5 stehen und in der zweiten Zeile, erste Spalte der Wert 0,2. Dies kann jedoch auch in einfacher Weise berechnet werden, sodass es nicht notwendig ist, beide Parameterwerte abzufragen und abzuspeichern. Liegt die Information vor, dass entsprechende Wertpaare nicht identisch, sondern invers sind, so kann dies mit geringem technischem Aufwand errechnet werden.

Sobald die Parameterwerte vorliegen, erfolgt ein Anwenden einer in einem persistenten Datenspeicher abgespeicherten Gewichtung auf die Parameterwerte und sodann ein Normieren der gewichteten Parameterwerte. Somit wird vorab in einem Datenspeicher eine Gewichtung hinterlegt, welche angibt, welche Parameter wie wichtig für das Endergebnis sind. So können beispielsweise sicherheitskritische Parameter definiert werden, die sodann höher gewichtet werden. Die Gewichtung kann in einem vorbereitenden Verfahrensschritt abgespeichert werden und kann mittels einer Luftschnittstelle bereitgestellt werden oder aber auch lokal abgespeichert werden. Um entsprechende Werte verarbeiten zu können, erfolgt ein Normieren, derart, dass alle Werte innerhalb eines bestimmten Wertebereichs gehalten werden. Ist beispielsweise eine Eingabe von 0-1 möglich, so können die Werte nicht normiert werden bzw. werden mit einem Normierungsfaktor 1 multipliziert. Gilt für einen anderen Parameter ein Definitionsbereich bzw. ein Wertebereich von 0-10, so kann der entsprechende Parameter derart normiert werden, dass der Parameterwert ebenfalls in einem Bereich von 0-1 abgebildet wird. Wird beispielsweise in diesem Verfahrensschritt ein Wert von sieben bereitgestellt, so kann er entsprechend auf den Wert 0,7 normiert werden. Dieser Schritt des Normierens ermöglicht es, dass Parameterwerte entstehen, die sodann miteinander vergleichbar sind. Somit ist es auch möglich, qualitative Bewertungen derart zu verarbeiten, dass sie gemäß der restlichen Parameterwerte verarbeitet werden können. Das Endergebnis können beispielsweise einzelne Faktoren sein, die miteinander aufmultipliziert werden, sodass sich ein einziger Parameterwert ergibt, der in Abhängigkeit der bereitgestellten mehreren Parameterwerte erstellt wird. Es können jedoch in den weiteren Verarbeitungsschritten auch die einzelnen normierten Parameterwerte berücksichtigt werden.

Sodann erfolgt ein Ansteuern der Maschine bzw. des Geräts, dies kann auch ein Aktuator sein, mittels der gewichteten und normierten Parameterwerte. Nun liegen also die benötigten Parameterwerte vor, und anhand dieser Parameterwerte kann eine Gerätekonfiguration erstellt werden. Gruppen von Parameterwerten werden hierbei Ansteuerungsbefehlen zugeordnet. So kann beispielsweise erkannt werden, dass bei einem Bauteil eines Fahrzeugs ein gewisser Verschleiß vorliegt. Somit muss also entschieden werden, ob dieses Bauteil ausgetauscht werden soll oder nicht, und darüber hinaus muss in diesem Ausführungsbeispiel festgestellt werden, welches Bauteil nunmehr eingesetzt werden soll. Anhand des mindestens einen Eingabesensors wird das Bauteil untersucht und die ausgelesenen Parameterwerte werden in die zweidimensionale Speicherstruktur eingepflegt. Somit hat man eine Bestandsaufnahme und es wird in der Speicherstruktur der aktuelle Zustand des Bauteils/ des Systems beschrieben.

Möglich ist es auch, dass zum Beispiel zwei Sensoren vorhanden sind, die jeweils den gleichen Wert (z.B. C-D und D-C) liefern (=effizient) - aber eine neue Berechnung erfordern, falls einer der Werte C oder D nicht reziprok abweicht.

Ein Beispiel ist das Ansteuern eines Aktuators, welcher über den AusgangsParameter zum Beispiel ein Flugzeugruder ansteuert. In einem solchen Fall kann es möglich sein, mehrere Sensorabfragen durchzuführen und gegebenenfalls auch die ganze Matrix abzufragen.

Anhand von vordefinierten Gruppen von Parameterwerten kann nun ein Ansteuerungsbefehl ausgewählt werden, der zum Beispiel besagt, dass das entsprechende Bauteil entfernt werden muss und ein anderes Bauteil eingesetzt werden muss. Da man nunmehr diverse Parameter belegt hat, wird auch klar, was die Zielanforderungen sind und somit kann der Ansteuerungsbefehl auch lauten, dass das Bauteil ausgebaut werden soll und mit einem anderen Bauteil des Typs X ersetzt werden soll. Die Parameter können sich auch auf mehrere Bauteile beziehen und es werden mehrere Ansteuerungsbefehle ausgegeben. Dies kann heißen, dass ein erstes Bauteil in einem Fahrzeug verbleiben kann, wobei ein zweites Bauteil ersetzt werden muss. Somit wird also insgesamt mittels mehrerer oder aber auch nur eines einzelnen Eingabesensors eine Mehrzahl an Parameterwerten extrahiert, die sodann bei der Entscheidungsfindung hilft, wie ein Gerät anzusteuern ist und was dies genau tun soll. So kann das vorgeschlagene Gerät ein Roboterarm sein, der die Befehle von Eingabesensoren ausführt. Hierzu sind mehrere Gruppen von Parameterwerten vorgegeben, die zu einem oder mehreren Ansteuerungsbefehlen führen.

Somit können also mehrere Parameterwerte abgespeichert werden und dieser Gruppe von Parameterwerten kann ein Ansteuerungsbefehl zugeordnet sein, welcher optional auch noch in mehreren Versionen vorliegt. So kann ein Ansteuerungsbefehl lauten, dass ein Bauteil mit einem ersten Bauteil ausgetauscht werden muss oder aber der Befehl lautet das eben dieses Bauteil mit einem zweiten Bauteil ausgetauscht werden muss. Somit wird also maschinell eine komplexe Entscheidung getroffen, welche das Gerät ansteuert und gemäß den erfassten Parameterwerten werden die geeigneten Steuerbefehle identifiziert und sodann ausgeführt.

Gemäß einem Aspekt der vorliegenden Erfindung stellt der Eingabesensor eine maximale Obergrenze an Eingaben bereit, welche einer halben kontrollierten Anzahl der Auswahloptionen minus der halben Anzahl der Auswahloptionen entspricht. Dies hat den Vorteil, dass die Hardwareeffizienz erhöht wird, und insbesondere erlaubt es das Merkmal, so dass die Parameter der paarweisen Auswahloptionen jeweils nur einmal belegt werden, dass nicht die komplette Matrix beschrieben werden muss. Da sich in der zweidimensionalen Speicherstruktur eine Diagonale dadurch bildet, dass die einzelnen Optionen zueinander nicht spezifiziert werden müssen, also gleiche Optionen, wie zum Beispiel Option A und Option A nicht belegt werden müssen und die Matrix im Übrigen gespiegelt wäre, ergibt sich der Vorteil, dass weniger die Hälfte der Matrixeinträge beschrieben werden muss.

Gemäß einem weiteren Aspekt der vorliegenden Erfindung wird das Verfahren iterativ durchgeführt und bei Änderungen der Parameter wird die Maschine erneut angesteuert. Dies hat den Vorteil, dass das Gerät auf Änderungen bei den Parameterwerten reagieren kann, und entsprechend erfolgt ein kontinuierliches Ansteuern des Geräts. Darüber hinaus müssen nicht alle Werte neu ausgewertet werden, sondern vielmehr reicht es, wenn nur ein Bruchteil der Parameter geändert wird. Somit wird Rechenaufwand dadurch gespart, dass lediglich ein einzelner Parameter geändert werden muss und es muss nicht die komplette Matrix erneut geschrieben werden.. Eine neue Berechnung kann dann durchgeführt werden)

Gemäß einem weiteren Aspekt der vorliegenden Erfindung weist die Gewichtung einen positiven und/oder negativen Betrag auf. Dies hat den Vorteil, dass einzelne Parameter invertiert werden können und somit leichter ausgewertet werden können. So kann bei der abgespeicherten Gewichtung angegeben werden, welche Werte besser sind oder schlechter. Somit ist es also möglich, dass semantische Einträge invertiert werden, und somit kann das Identifizieren des Ansteuerungsbefehls erleichtert werden. So kann beispielsweise ein Auswahlkriterium lauten, dass abgefragt wird, was besonders schlecht ist oder aber was besonders gut ist. Diese Werte sollten zueinander invers sein und somit kann eine einheitliche Eingabe sichergestellt werden. Zum Beispiel kann bei einem ersten Parameter ein besonders hoher Wert besonders gut sein und bei einem zweiten Parameter kann ein besonders hoher Wert sehr schlecht sein. Um dies insgesamt auswerten zu können, kann einer der Parameter invertiert werden und somit können diese einzelnen aufmultipliziert werden und es entsteht ein sinnvoller und maschinell automatisiert verwertbarer Gesamtbetrag.

Gemäß am weiteren Aspekt der vorliegenden Erfindung werden qualitative oder quantitative Parameter auf einen Wert von maximal 1 normiert. Dies hat den Vorteil, dass alle Parameterwerte vergleichbar gemacht werden, und insbesondere werden auch qualitative Parameter auf einen vergleichbaren Wert abgebildet. Hier ist der Wert 1 lediglich ein Beispielwert und gibt einen besonders positiven Wert an, da dieser besonders effizient verarbeitet werden kann. Generell wäre es auch möglich, Werte auf andere Wertebereiche zu normieren, beispielsweise auf einen Wert zwischen 1 und 1.000. Erfindungsgemäß hat sich jedoch empirisch gezeigt, dass das angeführte Beispiel besonders effizient ist.

Gemäß einem weiteren Aspekt der vorliegenden Erfindung wird die zweidimensionale Speicherstruktur als Matrix und/oder als Vektoren abgespeichert. Dies hat den Vorteil, dass besonders effiziente Speicherstrukturen geschaffen werden, und somit kann die zweidimensionale Datenstruktur auch in einzelne Vektoren zerlegt werden, die unterschiedlicher Länge sind. Darüber hinaus ist es auch möglich, einen einzelnen Vektor vorzusehen, der pro Zeile eine Mehrzahl an Werten spezifiziert. Somit ist es auch möglich, mathematisch einfach Berechnungen durchzuführen, und es stellt sich wieder der vorteilhafte technische Effekt ein, dass das vorgeschlagene Verfahren besonders Hardware effizient ist.

Gemäß einem weiteren Aspekt der vorliegenden Erfindung wird mittels des Eingabesensors eine Kurve zur Bestimmung mindestens eines Parameterwertes ausgelesen. Dies hat den Vorteil, dass der Eingabesensor stichprobenartig Kurvenstützpunkte wählen kann und somit erfolgt eine besonders effiziente Eingabe, welche es auch ermöglicht, dass Werte interpoliert oder extrapoliert werden. Dies wird in der Kurve abgebildet, die sodann von dem Eingabesensor ausgewählt und ausgelesen wird. Es kann auch umgekehrt die Eingabe von der Kurve kommend in die Matrix erfolgen.

Gemäß einem weiteren Aspekt der vorliegenden Erfindung werden mehrere zweidimensionale Speicherstrukturen bereitgestellt und diese werden normiert, um eine einzige zweidimensionale Speicherstruktur bereitzustellen. Dies hat den Vorteil, dass diverse Parameter abgefragt werden können und sodann können entweder einzelne Auswertungen erfolgen oder aber die Speicherstrukturen können bildlich gesprochen, übereinandergelegt werden und die Werte können gemäß eines Mittelwerts abgefragt werden. So kann bezüglich jeder Position in den zweidimensionalen Speicherstrukturen ein Mittelwert gebildet werden.

Gemäß einem weiteren Aspekt der vorliegenden Erfindung wird das Verfahren in einem verteilten Rechnernetz und/oder lokal ausgeführt. Dies hat den Vorteil, dass die einzelnen Verfahrensschritte auf unterschiedlichen Rechneranlagen ausgeführt werden können und zudem auch beispielsweise über ein Netzwerk Daten austauschen können. So kann zum Beispiel der persistente Datenspeicher lokal vorliegen und das Bereitstellen der zweidimensionalen Speicherstruktur erfolgt über ein Computernetzwerk. Dadurch entstehen technische Vorteile bei der Übermittlung und es ergibt sich eine höhere Effizienz.

Gemäß einem weiteren Aspekt weisen Ansteuerungsbefehle Handlungen und/oder Handlungsparameter auf. Dies hat den Vorteil, dass nicht nur die Handlungen spezifiziert werden, sondern es können auch Konfigurationen der Handlungen erstellt werden. So kann eine Handlung darin bestehen, ein gewisses Bauteil auszutauschen und anhand des Handlungsparameters kann spezifiziert werden, welches neue Bauteil eingebaut werden soll. Darüber hinaus können auch die Handlungsparameter die Handlung selbst beschreiben, welche beispielsweise zu einem bestimmten Zeitpunkt ausgeführt werden muss.

Gemäß einem weiteren Aspekt der vorliegenden Erfindung werden einzelne Verfahrensschritte iterativ zur Identifikation von Abweichungen durchgeführt. Dies hat den Vorteil, dass die Parameter mehrfach abgefragt werden und somit können falsche Eingaben identifiziert werden bzw. es kann auch der Mittelwert aus diversen Abfragen gebildet werden und im Weiteren verwendet werden.

Gemäß einem weiteren Aspekt der vorliegenden Erfindung wird die Maschine bzw. das Gerät virtualisiert betrieben. Dies hat den Vorteil, dass die Maschine als Softwarekomponente bzw. das Gerät als mehrere Softwarekomponenten ausgeführt wird und somit kann das Verfahren auch komplett virtuell, d. h. Computer implementiert ausgeführt werden. Die Matrix kann pro Kriterium verwendet werden, zusätzlich zu einer Kriterien-Matrix.

Die Aufgabe wird auch gelöst durch eine Systemanordnung zur hardwareeffizienten Ansteuerung eines Geräts, aufweisend einer Schnittstelleneinheit eingerichtet zum Bereitstellen einer symmetrischen, zweidimensionalen Speicherstruktur mit paarweisen Auswahloptionen, wobei die Auswahloptionen fortlaufend jeweils in beide Dimensionen angeordnet werden und die Auswahloptionen als entweder qualitative oder quantitative Parameter vorliegen; mindestens ein Eingabesensor zur Zuweisung von Parameterwerten zu den Parametern, wobei die Parameter jeweils der paarweisen Auswahloptionen nur einmal belegt werden; eine Gewichtungseinheit eingerichtet zum Anwenden einer in einem persistenten Datenspeicher abgespeicherten Gewichtung auf die Parameterwerte und ein Normieren der gewichteten Parameterwerte; und eine Steuerungseinheit eingerichtet zum Ansteuern des Geräts mittels der gewichteten und normierten Parameterwerte, wobei Gruppen von Parameterwerten Ansteuerungsbefehle zugordnet sind.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Systemanordnung, Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ausführungsdiagramm eines Verfahrens zum hardwareeffizienten Ansteuern eines Geräts gemäß einem Aspekt der vorliegenden Erfindung;
- Figur 2:: eine zweidimensionale Speicherstruktur, welche gemäß einem weiteren Aspekt der vorliegenden Erfindung anhand einer Kurve beschrieben wird und umgekehrt von der Kurve zur Eingabe; und
- Figur 3:: eine symmetrische zweidimensionale Speicherstruktur gemäß einem weiteren Aspekt der vorliegenden Erfindung.

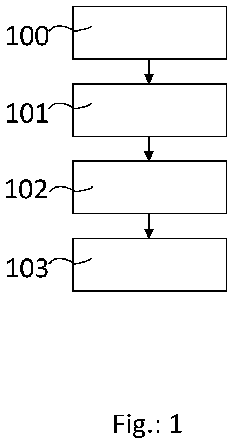

Figur 1 beschreibt in einem schematischen Ablaufdiagramm ein Verfahren zum hardwareeffizienten Ansteuern eines Geräts, aufweisend ein Bereitstellen 100 einer symmetrischen, zweidimensionalen Speicherstruktur mit paarweisen Auswahloptionen, wobei die Auswahloptionen fortlaufend jeweils in beide Dimensionen angeordnet werden und die Auswahloptionen als entweder qualitative oder quantitative Parameter vorliegen; ein Auslesen 101 mindestens eines Eingabesensors zur Zuweisung von Parameterwerten zu den Parametern, wobei die Parameter jeweils der paarweisen Auswahloptionen nur einmal belegt werden; ein Anwenden 102 einer in einem persistenten Datenspeicher abgespeicherten Gewichtung auf die Parameterwerte und ein Normieren der gewichteten Parameterwerte; und ein Ansteuern 103 des Geräts mittels der gewichteten und normierten Parameterwerte, wobei Gruppen von Parameterwerten Ansteuerungsbefehle zugordnet sind.

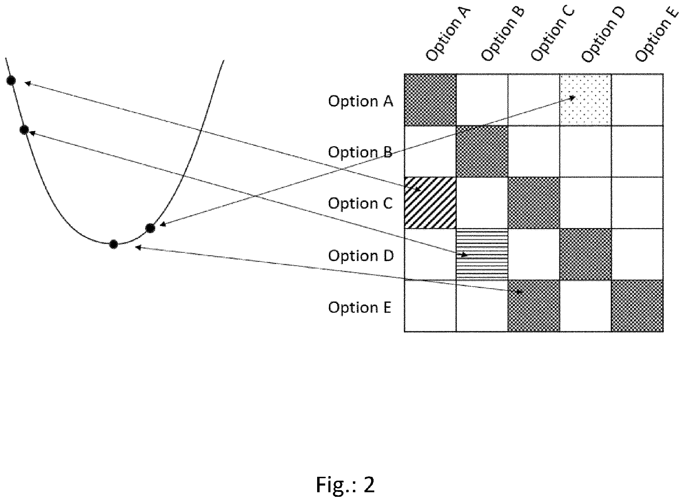

Figur 2 zeigt eine Matrix, wobei in den Spalten oben und den Zeilen seitlich die Optionen A, B, C, D und E eingetragen werden. Diese werden fortlaufend angetragen. Wie vorliegend gezeigt ist, bildet sich eine Diagonale, da die Optionen gleicher Spalten- und Zeilennummer nicht verglichen werden müssen. Wird beispielsweise angegeben, welche Option mit welchem Wert bevorzugt wird, so macht es keinen Sinn, Option A mit der gleichen Option A zu vergleichen und somit kann in der Diagonalen kein Wert eingetragen werden bzw. standardmäßig wird der Wert 1 eingetragen. Darüber hinaus ist vorliegend zu erkennen, dass ein Vergleichen beispielsweise der Option C mit der Option B den gleichen Wert liefern würde, wie ein Vergleichen der Option B mit Option C. Somit ist es also nicht notwendig, alle diese Vergleiche durchzuführen, und somit ist es möglich, bildlich gesprochen, beispielsweise nur den oberen Teil der Matrix, d. h. oberhalb der Diagonale, auszufüllen. Die Diagonale würde die Parameterwerte lediglich spiegeln bzw. würde diese invers spiegeln. Somit ist es nicht notwendig, die komplette Matrix auszufüllen, sondern erfindungsgemäß ist vorgesehen, dass die Parameter der jeweils paarweisen Auswahloptionen nur einmal belegt werden.

Eine paarweise Auswahloption ist beispielsweise die Zeile B mit der Spalte C oder die Zeile C mit der Spalte B. Hier entstehen gleiche Werte oder inverse Werte, sodass dies nur einmal ausgefüllt werden muss. In einem Beispiel ist vorgesehen, dass zu entscheiden ist, welche Option nunmehr bevorzugt ist und zu welchem Maße dies der Fall ist. Wird beispielsweise die Option B mit der Option C verglichen, so kann ein Wert angegeben werden, der angibt, in welchem Maße die Option B gegenüber der Option C bevorzugt wird. Dies würde in einem umgekehrten Fall einen inversen Wert geben, sodass die Gegenfrage nicht gestellt werden muss. Somit müssen eben nicht alle Felder der Matrix ausgefüllt werden und es ergibt sich, dass nur die Werte paarweise oberhalb oder unterhalb der Diagonale ausgefüllt werden müssen. Da jede paarweise Auswahloption nur einmal abgefragt werden muss, ergibt sich eine Anzahl an Abfragen von n Quadrat halbe Minus n halbe, also n²/2 - n/2, was weniger der Hälfte der gesamten Anzahl der Felder der Speicherstruktur entspricht, und somit ist das vorgeschlagene Verfahren besonders effizient.
Die in der Figur 2 gezeigten Pfeile können gemäß einem Aspekt der vorliegenden Erfindung auch bidirektional ausgestaltet sein.

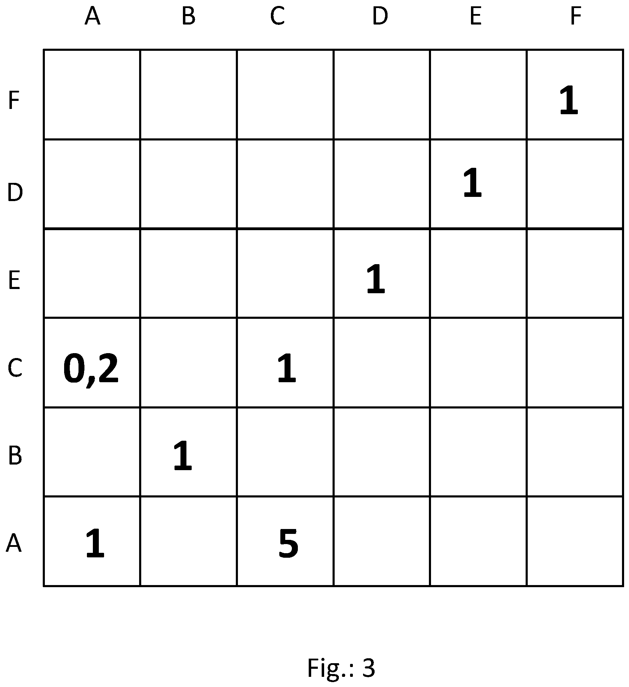

Figur 3 zeigt eine analog ausgestaltete Speicherstruktur, wobei die Auswahloptionen ebenfalls fortlaufend angetragen sind, jedoch die Reihenfolge invers ist. So ergibt sich ebenfalls eine Diagonale, welche jedoch entgegengesetzt der Diagonalen aus Figur 2 verläuft. Das Ergebnis ist jedoch das gleiche und der technische Effekt stellt sich in analoger Weise ein.

## Patentansprüche

1. Verfahren zum hardwareeffizienten Ansteuern eines Geräts, aufweisend:
- ein Bereitstellen (100) einer symmetrischen, zweidimensionalen Speicherstruktur mit paarweisen Auswahloptionen, wobei die Auswahloptionen fortlaufend jeweils in beide Dimensionen angeordnet werden und die Auswahloptionen als entweder qualitative oder quantitative Parameter vorliegen;
- ein Auslesen (101) mindestens eines Eingabesensors zur Zuweisung von Parameterwerten zu den Parametern, wobei die Parameter jeweils der paarweisen Auswahloptionen nur einmal belegt werden;
- ein Anwenden (102) einer in einem persistenten Datenspeicher abgespeicherten Gewichtung auf die Parameterwerte und ein Normieren der gewichteten Parameterwerte; und
- ein Ansteuern (103) des Geräts mittels der gewichteten und normierten Parameterwerte, wobei Gruppen von Parameterwerten Ansteuerungsbefehle zugordnet sind.

2. Verfahren nach Anspruch 1, **dadurch gekennzeichnet, dass** der Eingabesensor eine maximale Obergrenze an Eingaben bereitstellt, welche einer halben quadrierten Anzahl der Auswahloptionen minus der halben Anzahl der Auswahloptionen entspricht.

3. Verfahren nach Anspruch 1 oder 2, **dadurch gekennzeichnet, dass** das Verfahren iterativ durchgeführt wird und bei Änderungen der Parameter das Gerät erneut angesteuert wird.

4. Verfahren nach einem der vorhergehenden Ansprüche, **dadurch gekennzeichnet, dass** die Gewichtung einen positiven und/ oder negativen Betrag aufweist.

5. Verfahren nach einem der vorhergehenden Ansprüche, **dadurch gekennzeichnet, dass** qualitative und/ oder quantitative Parameter auf einen Wert von maximal 1 normiert werden.

6. Verfahren nach einem der vorhergehenden Ansprüche, **dadurch gekennzeichnet, dass** die zweidimensionale Speicherstruktur als Matrix und/ oder als Vektoren abgespeichert wird.

7. Verfahren nach einem der vorhergehenden Ansprüche, **dadurch gekennzeichnet, dass** mittels des Eingabesensors eine Kurve zur Bestimmung mindestens eines Parameterwerts ausgelesen wird.

8. Verfahren nach einem der vorhergehenden Ansprüche, **dadurch gekennzeichnet, dass** mehrere zweidimensionale Speicherstrukturen bereitgestellt werden und diese normiert werden, um eine einzige zweidimensionale Speicherstruktur bereitzustellen.

9. Verfahren nach einem der vorhergehenden Ansprüche, **dadurch gekennzeichnet, dass** das Verfahren in einem verteilten Rechnernetz und/ oder lokal ausgeführt wird.

10. Verfahren nach einem der vorhergehenden Ansprüche, **dadurch gekennzeichnet, dass** Ansteuerungsbefehle Handlungen und/ oder Handlungsparameter aufweisen.

11. Verfahren nach einem der vorhergehenden Ansprüche, **dadurch gekennzeichnet, dass** einzelne Verfahrensschritte iterativ zur Identifikation von Abweichungen durchgeführt werden.

12. Verfahren nach einem der vorhergehenden Ansprüche, **dadurch gekennzeichnet, dass** das Gerät virtualisiert betrieben wird.

13. Systemanordnung zur hardwareeffizienten Ansteuerung eines Geräts, aufweisend:
- einer Schnittstelleneinheit eingerichtet zum Bereitstellen (100) einer symmetrischen, zweidimensionalen Speicherstruktur mit paarweisen Auswahloptionen, wobei die Auswahloptionen fortlaufend jeweils in beide Dimensionen angeordnet werden und die Auswahloptionen als entweder qualitative oder quantitative Parameter vorliegen;
- mindestens ein Eingabesensor zur Zuweisung (101) von Parameterwerten zu den Parametern, wobei die Parameter jeweils der paarweisen Auswahloptionen nur einmal belegt werden;
- eine Gewichtungseinheit eingerichtet zum Anwenden (102) einer in einem persistenten Datenspeicher abgespeicherten Gewichtung auf die Parameterwerte und ein Normieren der gewichteten Parameterwerte; und
- eine Steuerungseinheit eingerichtet zum Ansteuern (103) des Geräts mittels der gewichteten und normierten Parameterwerte, wobei Gruppen von Parameterwerten Ansteuerungsbefehle zugordnet sind.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
